# NOUVEAU FASCICULE DE BREVET EUROPEEN

(11) **EP 0 686 520 B2**
(45) Date de publication et mention de la décision concernant l'opposition: **10.05.2000**
(45) Mention de la délivrance du brevet: 02.04.1997
(21) Numéro de dépôt: 95401131.8
(22) Date de dépôt: 16.05.1995
(51) Int. Cl.: B60J 5/04, B60R 21/04

(54) **Garniture composite à double paroi pour automobile**
Doppelwandige Türinnenverkleidung für Kraftfahrzeuge
Composite trimming with double wall for motor vehicle

(30) Priorité: 08.06.1994 FR 9406990
(43) Date de publication de la demande: 13.12.1995
(73) Titulaire: PLASTO S.A., 21300 Chenôve (FR)
(72) Inventeur: Beaulat, Bernard, F-21470 Brazey-en-Plaine (FR)
(74) Mandataire: Levy, David

(56) Documents cités:
- EP-A- 0 495 712
- EP-A- 0 551 825
- EP-A- 0 684 157
- DE-A- 1 755 559
- DE-A- 2 010 063
- DE-A- 2 510 220
- DE-A- 2 636 640
- DE-A- 3 615 436
- DE-C- 2 206 998
- DE-U- 8 909 961
- FR-A- 2 361 232
- FR-A- 2 473 962
- FR-A- 2 569 146
- US-A- 4 882 842

## Description

La présente invention concerne une garniture composite pour les portières d'automobiles, formée de deux parois déterminant entre elles des volumes, de façon à assurer simultanément au moins une fonction complémentaire à l'étanchéité, telle qu'un passage pour l'air de climatisation, un passage pour des fils électriques, une isolation phonique ou thermique ou un élément d'absorption de l'énergie en cas de choc latéral.

### Art Antérieur:

On sait que, dans les véhicules automobiles, il est nécessaire d'assurer l'étanchéité des intérieurs de portière afin d'éviter l'introduction des eaux pluviales ou des poussières à l'intérieur de l'habitacle et au contact des garnitures intérieures des véhicules. Pour réaliser cette étanchéité, il est connu de fixer une feuille imperméable sur les structures internes de la portière, cette feuille étant disposée de façon à diriger vers l'extérieur les infiltrations d'eau qui se font inévitablement auprès des vitres.

Ces feuilles imperméables sont généralement composées d'un film en matière plastique revêtu d'une couche adhésive qui facilite la mise en place. On utilise également des feuilles de mousse synthétique à cellules fermées qui ont pour avantage d'assurer, en plus de l'étanchéité, une isolation thermique et une isolation phonique de l'habitacle. De tels panneaux sont de plus thermoformables et s'adaptent ainsi parfaitement aux structures complexes des portières sur lesquelles ils sont fixés au moyen d'un cordon d'adhésif.

Par ailleurs, la nécessité, pour les constructeurs d'automobiles, d'améliorer sans cesse le confort des passagers les conduit à perfectionner les systèmes de climatisation de l'habitacle. Pour obtenir des résultats satisfaisants, il est nécessaire de disposer des conduites de ventilation de façon à délivrer de l'air climatisé dans l'habitacle et auprès de chaque passager.

Si la réalisation des aérations est relativement aisée pour la partie avant du véhicule, l'emplacement des conduits permettant de climatiser la partie arrière du véhicule est souvent difficile à trouver : la console centrale est peu disponible en raison des équipements électriques et mécaniques et le passage dans les portières est souvent préféré, d'autant plus qu'il permet l'arrivée de l'air chaud nécessaire en hiver pour éliminer la buée des vitres latérales, comme il est indiqué par exemple dans les demandes de brevet FR 2 473 962 et FR 2 361 232.

EP-A-0 551 825 concerne une garniture d'étanchéité de portière thermoformée, interposée entre la structure de portière et l'habillage intérieur. Toutefois, la garniture d'étanchéité décrite dans ce document ne comporte qu'une seule paroi et il n'est donc pas possible de ménager des volumes spécifiques assurant des fonctions supplémentaires à celle de l'étanchéité.

EP-A-0 495 712 concerne une portière d'automobile dont l'habillage intérieur assure également la fonction d'étanchéité. Mais en raison du résultat recherché qui est celui d'une esthétique, car visible de l'intérieur de l'habitacle, il s'ensuit que la fabrication d'un tel habillage intérieur avec les moyens d'étanchéité est non seulement complexe et délicate mais également très coûteuse ; de plus, il n'y a pas à proprement parler de garniture qui assure l'étanchéité et d'autres fonctions supplémentaires.

DE 25 10 220, FR-A-2 569 146, EP-A-0 495 712 concernent respectivement des habillages intérieurs, des moyens pour le passage d'air ménagés dans l'habillage intérieur ou d'autres dispositifs.

### Objet de l'invention :

La présente invention propose une garniture composite pour les automobiles qui assure à la fois l'étanchéité de la portière et au moins une autre fonction de confort ou de sécurité, telle que la canalisation de l'air dimatisé vers les parties latérales et arrières du véhicule, le maintien et la protection de fils électriques, l'isolation thermique, l'isolation phonique et/ou la protection contre des chocs latéraux ; ce qui augmente la sécurité et le confort des passagers.

La présente invention est définie par les caractéristiques de la revendication 1.

### Description :

Pour réaliser une garniture composite selon l'invention on peut utiliser les matériaux mis en oeuvre de façon habituelle pour ce genre d'application, mais il est préférable de choisir des panneaux de mousse de de polyéthylène ou polypropylène qui ont les avantages, du fait de leur épaisseur, de présenter de meilleures caractéristiques de rigidité, d'isolation thermique et d'isolation acoustique que les films minces.

On peut également utiliser des structures composites formées d'un film en polyéthylène, en polypropylène, avec la possibilité d'intégrer des fibres ou des fils capables de renforcer la résistance de panneaux.

Pour obtenir les formes s'adaptant au mieux à la structure métallique de la portière, il est important que le matériau soit tnermoformable. Dans le cas général où la fabrication d'une garniture composite, à double paroi selon l'invention, nécessite l'assemblage de deux pièces différentes thermoformées, lesdites pièces peuvent être obtenues à partir de matériaux différents soit par leur constituant, soit par l'épaisseur qui peut varier entre 0,5 et 12 mm.

Pour fabriquer une garniture composite selon l'invention on met en forme une feuille de matière de façon à obtenir un panneau s'adaptant parfaitement aux structures métalliques de la portière et obturant les ouvertures susceptibles de laisser pénétrer de l'eau. La mise en forme se fait généralement par thermoformage ou par hydroformage, selon des méthodes connues de l'homme de l'art.

On forme ensuite selon le même procédé une seconde pièce qui, après fixation sur le premier panneau, va déterminer un ou plusieurs volumes nécessaires à la réalisation des conduits ou cavités souhaitées.

Si l'on souhaite obtenir un conduit d'air, les orifices d'entrée et de sortie de ce conduit peuvent être obtenus directement par assemblage des formes pré-moulées ou être découpés dans la garniture assemblée ; en fonction du résultat attendu, l'assemblage pourra former un simple conduit dont la disposition est prévue pour s'adapter à l'intérieur de l'habillage de portière ou former un réseau plus complexe permettant de distribuer de l'air climatisé à la fois vers l'arrière du véhicule et vers les vitres latérales.

Si l'on souhaite obtenir des gaines destinées à supporter et protéger des fils électriques, la réalisation est du même type que pour les conduits d'air, avec de la même façon, la possibilité de réaliser directement un réseau plus complexe de répartition des différents fils électriques. Il est à noter que cette disposition assure une fiabilité accrue des conducteurs électriques qui sont à la fois supportés et protégés d'un contact avec la structure métallique de la portière.

Si l'on souhaite obtenir des volumes insonorisants, isolants thermiques ou des éléments de protection contre les chocs latéraux, on forme les parois de façon à obtenir des cavités fermées que l'on emplit avec les matériaux adaptés à la fonction souhaitée. Par exemple, pour obtenir une isolation thermique, la cavité peut être remplie avec de la mousse de matière synthétique, de la laine de verre ou de la laine de feutre ; pour obtenir une isolation phonique, on place dans la cavité des mousses de matière synthétique ou des corps plus denses de faible épaisseur comme des polymères chargés ; enfin, pour obtenir une protection des passagers contre les chocs latéraux, on garnit les cavités avec des corps absorbant l'énergie comme des structures en nid d'abeille, des billes creuses en polypropylène ou des gels synthétiques.

L'assemblage des deux éléments composant la garniture selon l'invention peut être fait au moyen d'un thermosoudage ou d'un adhésif.

La garniture composite selon l'invention ainsi obtenue est fixée sur la structure de la portière à l'aide des moyens habituels comme par exemple un cordon de colle "hot melt" ou un adhésif sensible à la pression déposé sur le pourtour de la garniture ou encore au moyen de clips ou d'agrafes. Le moyen préféré est un cordon de colle protégé par un protecteur que l'on retire au moment de la mise en place.

Lorsque la garniture comporte un conduit pour l'air de climatisation, les extrémités du conduit ainsi supporté par le panneau d'étanchéité sont emboîtées ensuite sur les pièces correspondantes de la structure de portière ou du panneau d'habillage. Ce montage est facilité si on utilise une mousse de polyoléfine qui peut être thermoformée et qui garde la souplesse et l'élasticité nécessaires au raccordement.

Ainsi par exemple, l'entrée de l'air dans le conduit de la portière avant pourra se faire en emboîtant l'extrémité du dit conduit sur un manchon porté par l'habillage de portière, ce dernier venant s'appliquer au moyen d'un joint souple sur la sortie d'air ménagée sur le côté du tableau de bord lorsque la porte est en position fermée.

Les sorties des conduits sont connectées soit à des manchons dirigeant l'air vers le pied milieu qui est un montant vertical fixe séparant les deux portières, puis vers les parties arrières des véhicules, soit vers des diffuseurs assurant l'aération au travers des habillages de portière.

D'autres avantages et caractéristiques apparaîtront à la lecture de deux modes de réalisation préférés de l'invention, ainsi que des dessins annexés sur lesquels :
la figure 1 est une vue schématique en coupe d'une portière d'automobile munie de la garniture composite selon un premier mode de réalisation de l'invention et de l'habillage interne.
La figure 2 est une vue schématique en coupe d'un deuxième mode de réalisation de la garniture composite selon l'invention.

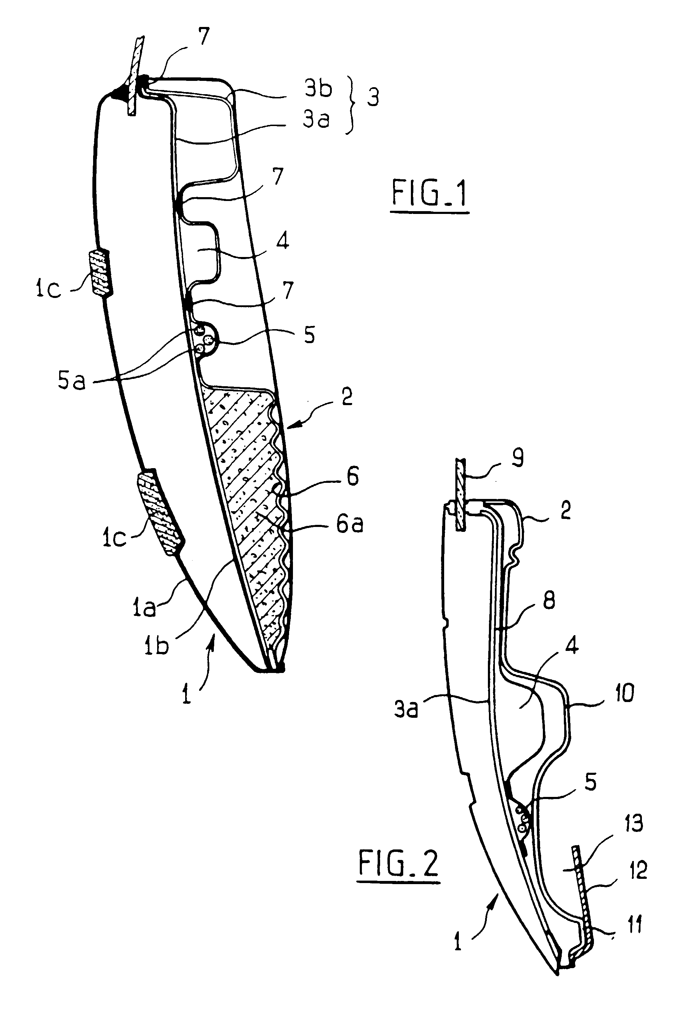

Sur la figure 1, on a représenté une portière automobile 1 dont la structure, métallique par exemple, comprend une feuillure externe la munie de protections latérales 1c et une feuillure interne 1b sur laquelle est fixée la garniture composite selon la présente invention, un panneau d'habillage intérieur 2 de la portière étant fixé par la suite sur ladite garniture composite.

La garniture composite 3 comprend un premier panneau 3a assurant la fonction d'étanchéité, qui est fixé par tout moyen approprié sur la feuillure interne 1b et qui est réalisé par exemple à partir d'une feuille de mousse de polyéthylène thermoformée, et par un deuxième panneau 3b, réalisé sous forme d'une coquille thermoformée par exemple en mousse de polyéthylène. Dans le deuxième panneau 3b qui assure d'autres fonctions que celles d'étanchéité, est formé au moins un volume ou cavité. De préférence, il comporte plusieurs volumes dont un volume 4 constitue un conduit de ventilation et un autre volume 5 destiné au passage et au maintien de câbles électriques 5a. Un autre volume ou cavité 6 est également prévu et il peut être empli d'un matériau absorbeur d'énergie 6a. La liaison entre les deux panneaux 3a et 3b est effectuée, par exemple au moyen de soudures 7.

Selon le deuxième mode de réalisation représenté sur la figure 2, le panneau 3b qui assure d'autres fonctions que celles d'étanchéité, comprend au moins les deux volumes ou cavités 4 et 5 mais ne recouvre pas totalement le panneau d'étanchéité 3a, s'arrêtant par exemple juste au-dessous de la cavité 5. La cavité 4 fait partie ou est reliée à un réseau de distribution d'air (non représenté) afin d'assurer à la fois la ventilation de l'arrière du véhicule et l'élimination de la buée par des conduits verticaux 8 amenant de l'air chaud près de la vitre latérale 9. Le panneau d'habillage intérieur 2 de la portière 1 peut être thermoformé et comporter un accoudoir 10, ménagé par thermoformage par exemple au droit de la cavité 4, et un rebord intérieur 11 sur lequel peut être fixée par tout moyen approprié une pièce 12 afin de constituer un vide-poches 13.

Les garnitures composites à double paroi comportant des volumes susceptibles de former des conduits de ventilation, des gaines pour le passage de fils électriques ou des cavités destinées à recevoir des matériaux absorbant les bruits, ou les écarts thermiques ou l'énergie trouvent leur application dans la construction des véhicules automobiles. La réalisation d'une telle garniture assurant à la fois l'étanchéité de la portière et au moins une autre fonction de confort ou de sécurité permet de simplifier considérablement le montage du véhicule et optimise l'utilisation du volume intérieur de la portière, même si celui-ci comporte des formes complexes.

## Revendications

1. Garniture composite à multiples fonctions, pour portière d'automobile, montée entre la structure (1) de la portière et un habillage intérieur (2), comportant un panneau (3a) assurant la fonction d'étanchéité, caractérisée en ce que la garniture qui est distincte de l'habillage intérieur est constituée par deux panneaux (3a,3b) souples, collés ou soudés entre eux, dont l'un (3a) assure ladite fonction d'étanchéité et dont l'autre est thermoformé, les deux panneaux en mousse de polyoléfine souples et élastiques pour permettre le montage entre ladite structure et l'habillage intérieur délimitant entre eux au moins un volume (4,5) ou cavité intégré qui est utilisé pour assurer une ou plusieurs fonctions supplémentaires choisies parmi le passage d'air de climatisation, le passage de câbles électriques, le maintien de matériaux absorbeurs d'énergie ou de matériaux isolants thermiques ou insonorisants.

2. Garniture selon la revendication 1, caractérisée en ce qu'elle comprend plusieurs volumes intégrés (4, 5, 6) dont un est (4) utilisé pour la distribution d'air de climatisation et un autre (5) pour le passage et le maintien des câbles électriques.

3. Garniture selon la revendication 1, caractérisée en ce qu'elle comprend en outre un volume (6) rempli de matériau absorbeur d'énergie susceptible de constituer une protection contre des chocs latéraux produits sur ladite portière.

4. Garniture selon la revendication 1, caractérisée en ce qu'elle comporte des volumes susceptibles d'être remplis au moins partiellement par un matériau isolant thermique ou insonorisant.

5. Garniture selon l'une des revendications 1 à 4, caractérisée en ce qu'elle est obtenue à partir de deux feuilles d'épaisseur identiques.

6. Garniture selon la revendication 5, caractérisée en ce que les deux feuilles thermoformées sont assemblées par thermosoudure ou collage.

7. Garniture pour portières d'automobiles selon les revendications 1 à 6, caractérisée en ce qu'elle est fixée à l'intérieur d'une portière automobile au moyen d'un cordon de colle sensible à la pression.

8. Garniture selon l'une des revendications précédentes, caractérisée en ce que l'habillage intérieur (2) comprend un accoudoir (10) ménagé au droit d'une desdites cavités et, de préférence au droit de la cavité (4) assurant la distribution d'air de ventilation.

9. Garniture selon la revendication 1, caractérisée en ce que le panneau (3b) à volumes intégrés (4, 5) recouvre partiellement le panneau d'étanchéité (3a).

## Claims

1. Multifunction composite lining for automobile doors adapted to be mounted between the structure (1) of the door and an interior covering (2), said lining including an inner panel (3a) providing the sealing function characterized in that the lining which is separate from the interior covering comprises two flexible panels (3a, 3b), glued or welded together, one of which (3a) assures the sealing function and the other one is thermoformed, the two panels of polyolefin foam being flexible and resilient to permit mounting between said structure and the interior covering and defining between them at least one integral volume (4, 5) or cavity which is used for one or more additional functions, chosen among ducting for air conditioning or electrical cables, fastened maintaining energy absorbent material or thermal or sound insulation material.

2. Lining according to claim 1 comprising a plurality of integral volumes (4, 5, 6), one (4) of which is used to distribute air conditioning air and another (5) of which is used to accommodate and support electrical cables.

3. Lining according to claim 1 further comprising a volume (6) filled with energy absorbing material adapted to constitute side impact protection for said door.

4. Lining according to claim 1 including volumes adapted to be filled at least partly with a heat insulation or soundproofing material.

5. Lining according to one of claims 1 to 4 made from two thermoformable polymer sheets of the same thickness.

6. Lining according to claim 5 wherein said two thermoformed sheets are welded or glued together.

7. Automobile door lining according to claims 1 to 6 adapted to be fixed to the interior of an automobile door my means of a bead or pressure-sensitive glue.

8. Lining according to any of the preceding claims, wherein said interior covering (2) comprises an elbow support (10) formed at the location of one of said cavities, preferably at the location of the cavity (4) distributing air conditioning air.

9. Lining according to claim 1 wherein said panel (3a) with integral volumes (4, 5) covers part of the sealing panel (3a).

## Patentansprüche

1. Mehrfunktionelle Verbundeinlage für Kraftfahrzeugtür, die zwischen dem Körper (1) der Tür und einer Innenverkleidung (2) montiert ist und eine die Abdichtungsfunktion gewährleistende Tafel (3a) aufweist, dadurch gekennzeichnet, daß die Einlage, die von der Innenverkleidung getrennt ist, aus zwei miteinander verklebten oder verschweißten flexiblen Tafeln (3a, 3b) besteht, deren eine (3a) die Abdichtungsfunktion gewährleistet und deren andere warmgeformt ist, wobei die beiden Tafeln, die aus Polyolefinschaum bestehen und flexibel und elastisch sind, um die Montage zwischen dem Körper und der Innenverkleidung zu gestatten, miteinander mindestens ein integriertes Volumen (4, 5) bzw. einen integrierten Hohlraum abgrenzen, das bzw. der für eine oder mehrere zusätzliche Funktionen verwendet wird, die aus dem Durchgang von Klimatisierungsluft, dem Durchgang von elektrischen Kabeln, dem Halt von Energie absorbierenden Werkstoffen oder von wärme- oder schallisolierenden Werkstoffen ausgewählt sind.

2. Einlage nach Anspruch 1, dadurch gekennzeichnet, daß sie mehrere integrierte Volumen (4, 5, 6) aufweist, von denen eines (4) für die Verteilung der Klimatisierungsluft und ein anderes (5) für den Durchgang und den Halt der elektrischen Kabeln verwendet wird.

3. Einlage nach Anspruch 3, dadurch gekennzeichnet, daß sie außerdem ein Volumen (5) aufweist, das mit einem energieabsorbierenden Material gefüllt ist, das einen Schutz gegen auf die Tür ausgeübte seitliche Stöße bilden kann.

4. Einlage nach Anspruch 1, dadurch gekennzeichnet, daß sie Volumen aufweist, die mindestens teilweise mit einem wärme- oder schallisolierenden Material gefüllt sein können.

5. Einlage nach einem der Ansprüche 1 bis 4, dadurch gekennzeichnet, daß sie aus zwei Folien gleicher Dicke gebildet ist.

6. Einlage nach Anspruch 5, dadurch gekennzeichnet, daß die beiden warmgeformten Folien durch Warmverschweißen oder Kleben miteinander verbunden sind.

7. Einlage für Kraftfahrzeugtüren nach Anspruch 1 bis 6, dadurch gekennzeichnet, daß sie im Inneren einer Kraftfahrzeugtür mit Hilfe einer druckempfindlichen Klebstoffraupe befestigt ist.

8. Einlage nach einem der vorhergehenden Ansprüche, dadurch gekennzeichnet, daß die Innenverkleidung (2) eine Armstütze (10) aufweist, die auf Höhe einer dieser Hohlräume und vorzugsweise auf Höhe des die Verteilung der Belüftungsluft gewährleistenden Hohlraums (4) vorgesehen ist.

9. Einlage nach Anspruch 1, dadurch gekennzeichnet, daß die Tafel (3b) mit integrierten Volumen (4, 5) die Dichtungstafel (3a) teilweise bedeckt.
